# FASCICULE DE BREVET EUROPEEN

(11) **EP 3 056 925 B1**
(45) Date de publication et mention de la délivrance du brevet: **07.03.2018**
(21) Numéro de dépôt: 16152239.6
(22) Date de dépôt: 21.01.2016
(51) Int. Cl.: G01S 19/01, G01S 19/21

(54) **SYSTÈME ET PROCÉDÉ COLLABORATIFS D'AUTHENFICATION DE SIGNAUX GNSS**
KOOPERATIVES SYSTEM UND VERFAHREN ZUR AUTHENTIFIZIERUNG VON GNSS-SIGNALEN
COLLABORATIVE SYSTEM AND METHOD FOR AUTHENTICATING GNSS SIGNALS

(30) Priorité: 13.02.2015 FR 1551198
(43) Date de publication de la demande: 17.08.2016
(73) Titulaire: Centre National d'Etudes Spatiales, 75038 Paris (FR); M3 Systems, 31410 Lavernose-Lacasse (FR)
(72) Inventeur: VIGNEAU, Willy, 31600 Muret (FR); RIES, Lionel, 81290 Vivier les Montagnes (FR); DESENFANS, Olivier, 5081 Meux (BE)
(74) Mandataire: Pronovem

(56) Documents cités:
- EP-A1- 2 708 917
- US-A1- 2014 009 336

## Description

### Domaine Technique

De manière générale, la présente invention concerne l'authentification de signaux GNSS, plus particulièrement en fonction de la position géographique de leur réception.

### Arrière-plan technologique

Les systèmes de positionnement par satellites (appelés GNSS - acronyme du terme anglais « Global Navigation Satellite System ») ont un impact grandissant dans notre société. Obtenir rapidement et simplement sa position sur une carte à l'aide d'un terminal de poche, d'une tablette, d'un ordinateur portable, ou tout autre assistant électronique est maintenant perçu comme une capacité acquise, normale, voire même banale. Une des conséquences de cette évolution est, par exemple, que la carte routière sur support papier, qui doit progressivement céder sa place aux récepteurs GNSS, est une espèce en voie de disparition.

La position calculée par le récepteur GNSS (terme utilisé dans le cadre de ce document comme synonyme de « récepteur de signaux de radionavigation ») n'est cependant pas automatiquement fiable : en effet, rien ne garantit a priori ni l'intégrité (capacité du récepteur à détecter que l'erreur de positionnement dépasse un seuil fixé, et cela en un temps limité) de la mesure, ni son authenticité (garantie que le système ne subit aucun leurrage.) Différentes méthodes ont été développées dans le monde de l'aviation civile afin de garantir l'intégrité des mesures GNSS, par exemple l'algorithme RAIM (« Receiver Autonomous Integrity Monitoring » - Surveillance d'intégrité autonome du récepteur.)

En ce qui concerne l'authenticité des signaux reçus, le Département du Transport des Etats-Unis publia en 2001 le rapport Volpe (John A. Volpe National Transportation Systems Center for the U.S. Department of Transportation, « Vulnerability Assessment of the Transportation Infrastructure Relying on the Global Positioning System, » Final Report 2001), rapport mettant en garde les autorités américaines sur l'impact grandissant du GPS (« Global Positioning System », système de positionnement mondial mis en place et contrôlé par les Etats-Unis) dans les infrastructures civiles et sur sa vulnérabilité aux attaques. Parmi ces attaques, le rapport met particulièrement en lumière les dangers d'une attaque à base de « spoofing » (en français « leurrage »). Ce type d'attaque consiste à tromper un récepteur GNSS sur son calcul de position, vitesse et temps (en bref : « PVT ») en lui faisant poursuivre des signaux contrefaits. Face à cette menace de leurrage, différentes méthodes visant à authentifier les signaux de radionavigation traités par le récepteur et entrant dans la solution PVT ont été proposées.

Les systèmes GNSS transmettent des signaux ouverts, qui portent des codes d'étalement disponibles publiquement, et des signaux à accès restreint (sécurisé), dont les codes d'étalement sont cryptés. La falsification de ces signaux est quasiment impossible, ce qui rend le leurrage beaucoup plus difficile. Toutefois, pour pouvoir exploiter les signaux à accès sécurisé de manière directe, le récepteur a besoin d'une clé cryptographique qui lui permet de générer une réplique locale des codes d'étalement. Or la mise en place d'un étage de corrélation pour générer des répliques locales cryptées et apériodiques implique une complexité importante et un coût élevé dû à la sécurisation nécessaire du module. En outre, des processus stricts pour la diffusion des clés, leur mise à jour, ainsi que la diffusion des terminaux doivent être mis en place afin de préserver le caractère secret des signaux à accès restreint. L'exploitation directe des signaux à accès sécurisé restera donc réservée à un groupe limité d'utilisateurs spécialisés.

Le document WO 2010/105136 A1 décrit un système d'authentification de signaux GPS dans lequel le récepteur GPS estime les bribes (en anglais : « chips ») du code W, qui multiple le code P pour donner le code crypté P(Y), et les compare aux bribes (présumées) exactes du code W qui lui sont communiquées par une voie de communication sécurisée. Le récepteur conclut à l'authenticité des signaux reçus ou à un leurrage en fonction de la statistique de corrélation entre les bribes estimées et les bribes (présumées) exactes du code W. Ce système requiert une infrastructure pour diffuser le code W. Afin que le code W diffusé ne puisse pas être utilisé pour faire du leurrage, il doit être diffusé en retard par rapport au code W sur les signaux GPS. Comme mode de réalisation alternatif de l'invention, le document WO 2010/105136 A1 mentionne la possibilité de remplacer les bribes (présumées) exactes du code crypté par des estimées réalisées sur une deuxième fréquence. Cette alternative présuppose l'utilisation d'un récepteur bi-fréquence et la présence du code crypté sur au moins deux signaux GNSS à des fréquences différentes.

Dans le procédé décrit dans le document US 7,679,552 B2, deux récepteurs GPS sont combinés et coopèrent pour, entre autres, valider ou rejeter l'intégrité des signaux GPS.

L'article « Signal Authentication - A Secure Civil GNSS for Today, » Sherman Lo, David de Lorenzo, Per Enge, Dennis Akos et Paul Bradley, InsideGNSS, Septembre/Octobre 2009, pp. 30-39, décrit un procédé d'authentification de signaux GNSS, dans lequel un récepteur d'utilisateur et une station de référence prennent des « clichés » des signaux reçus à l'endroit respectif. Dans l'article en question, un cliché correspond à un jeu de données numériques représentant une bande de fréquences contenant le signal ouvert GPS C/A et le signal GPS crypté P(Y), l'un en quadrature de phase par rapport à l'autre, enregistrée pendant un certain intervalle de temps. Le récepteur d'utilisateur transmet son cliché à la station de référence qui évalue la corrélation entre les signaux en quadrature de phase de deux clichés en glissant la fenêtre de corrélation. Si un pic de corrélation est détecté, on déduit que les signaux sont authentiques. On présuppose que les deux récepteurs (celui de l'utilisateur et celui de la station de base) ne sont pas leurrés par le même attaquant.

La demande de brevet US 2014/0009336 A1 reprend l'idée des clichés pour signer une information de navigation (position et date). Par contre, le cliché est transmis à un centre d'authentification, qui a accès à la clé cryptographique du signal crypté. Le centre d'authentification prend la position et la date renseignée par le récepteur de l'utilisateur et reconstruit les signaux cryptés que le récepteur aurait dû recevoir à la position et à la date indiquée. Le cliché est comparé à la reconstruction à l'aide d'une corrélation. En cas de détection d'un pic de corrélation d'une certaine ampleur, le cliché ainsi que l'information de navigation sont identifiés comme authentiques.

Un système et un procédé d'authentification similaires sont décrits dans la demande de brevet EP 2 708 917. Un raffinement du procédé réside dans le fait que le récepteur de l'utilisateur produit une information d'horodatage du cliché, cette information d'horodatage étant indicative des temps d'émission des différents signaux de radionavigation contenus dans le cliché. Cette information d'horodatage permet de considérablement réduire la plage de recherche d'un pic de corrélation.

### Problème technique

Les solutions existantes basées sur l'authentification à l'aide de clichés des signaux cryptés sont susceptibles de générer un trafic de données important vers et depuis le ou les centres d'authentification, notamment si le nombre de récepteurs demandant l'authentification est important.

Un objectif de la présente invention est de proposer une solution d'authentification adaptée à une situation avec une pluralité de récepteurs GNSS.

### Description générale de l'invention

La solution selon l'invention repose sur une vérification délocalisée de l'authenticité des signaux GNSS par un centre d'authentification. Par conséquent, l'invention comprend plusieurs volets. Un premier volet concerne un procédé mis en oeuvre sur un récepteur GNSS d'utilisateur et un récepteur configuré pour exécuter ce procédé. Un autre volet concerne un procédé mis en oeuvre par le centre d'authentification, qui a pour but de vérifier l'authenticité des signaux GNSS reçus par des récepteurs d'utilisateurs. Dans l'ensemble, les différents volets de l'invention forment un système, respectivement un procédé, collaboratif d'authentification de signaux GNSS.

Selon un premier aspect de l'invention, il est donc proposé un procédé de traitement de signaux de radionavigation, destiné à être mis en oeuvre par un récepteur de signaux de radionavigation. Le procédé comprend :
∘ la réception d'une ou de plusieurs bandes de radiofréquences contenant un ensemble de signaux de radionavigation (« signaux GNSS »), dont chacun provient d'un émetteur (p.ex. d'un satellite ou d'un pseudolite) spécifique, chaque émetteur émettant au moins un signal à accès libre et un signal à accès sécurisé (c.-à-d. portant un code d'étalement crypté) ;
∘ l'estimation de grandeurs brutes de radionavigation, dont au moins des pseudo-distances et optionnellement des phases, des décalages Doppler, etc. à partir au moins des signaux à accès libre ;
∘ le calcul d'une information de navigation (composée au moins de la position et du temps et optionnellement également de la vitesse) sur la base des grandeurs brutes estimées ;
∘ la communication avec un centre d'authentification par une voie de communication sécurisée, cette communication comprenant la transmission de l'information de navigation et/ou des grandeurs brutes estimées au centre d'authentification et la réception de la part du centre d'authentification d'une notification concernant l'authenticité de l'information de navigation et/ou des grandeurs brutes estimées transmises ;

Le procédé se caractérise par un premier mode de fonctionnement et un deuxième mode de fonctionnement du récepteur :
∘ dans le premier mode de fonctionnement du récepteur de signaux de radionavigation, celui-ci effectue l'enregistrement d'un cliché numérique au moins des signaux à accès sécurisé et la transmission de ce cliché numérique au centre d'authentification ensemble avec l'information de navigation et/ou les grandeurs brutes estimées, le cliché numérique étant en relation temporelle définie avec l'information de navigation et/ou les grandeurs brutes transmises ;
∘ dans le deuxième mode de fonctionnement du récepteur de signaux de radionavigation, celui-ci effectue la transmission, au centre d'authentification, de l'information de navigation et/ou des grandeurs brutes estimées (obtenus à partir des signaux à accès libre) sans les accompagner de cliché numérique.

Par cliché numérique, on entend, dans le contexte de l'invention, a) un fichier numérique contenant un signal numérisé sur un intervalle de temps défini, dans une bande passante respectant les conditions de Shannon par rapport au signal ou aux signaux à numériser, ou b) un flux (en anglais : « stream ») de données numériques représentant un signal numérisé de manière continue dans une bande passante respectant les conditions de Shannon par rapport au signal ou aux signaux à numériser. Dans le contexte de ce document, le terme « enregistrement » couvre aussi bien un enregistrment durable (sauvegarde) qu'un enregistrement passager, p.ex. une mise en mémoire temporaire aux fins du traitement.

Selon un mode de réalisation avantageux du procédé, l'enregistrement du cliché numérique comprend les étapes suivantes :
∘ le signal numérique fourni par l'étage RF du récepteur est filtré pour éliminer les signaux à accès ouvert ;
∘ les signaux à accès sécurisé sont optionnellement transposés à une fréquence intermédiaire spécifique au récepteur ou au type de récepteur.

Les données ainsi obtenues sont ensuite cryptées (et optionnellement comprimées) pour la transmission au centre d'authentification. Un avantage du filtrage est la réduction de la bande passante, ce qui permet une compression des données par ré-échantillonnage et donc une réduction de la charge. Le filtrage peut être réalisé par un premier filtrage passe-haut suivi d'un deuxième filtrage passe-bas. En ce qui concerne la transposition à une fréquence intermédiaire, cette mesure permettrait au centre d'authentification d'identifier le récepteur et/ou le type de récepteur et contribuerait donc au niveau de sécurité global du système. La transposition à la fréquence intermédiaire peut être réalisée en même temps que le filtrage passe-bas. La fréquence intermédiaire constituerait une clé d'identification du récepteur ou du type de récepteur.

Un récepteur mettant en oeuvre le procédé selon le premier aspect de l'invention a donc des comportements différents selon le mode de fonctionnement dans lequel il se trouve actuellement. Dans le premier mode de fonctionnement, la prise de clichés et leur transmission au centre d'authentification est activée, tandis que dans le deuxième mode de fonctionnement, au moins la transmission des clichés est suspendue. De préférence, dans le deuxième mode de fonctionnement, la prise de clichés est également suspendue. Le fait de pouvoir suspendre la transmission de clichés de manière sélective permet de réduire la charge du réseau de télécommunication et le nombre de calculs à effectuer par le centre d'authentification.

Un deuxième aspect de l'invention concerne un récepteur de signaux de radionavigation, comprenant, afin de pouvoir mettre en oeuvre le procédé ci-dessus :
∘ un étage RF pour recevoir une ou plusieurs bandes de radiofréquences contenant un ensemble de signaux de radionavigation, dont chacun provient d'un émetteur spécifique, chaque émetteur émettant au moins un signal à accès libre et un signal à accès sécurisé ;
∘ un processeur, p. ex. un processeur de signaux numériques, relié à l'étage RF, configuré pour l'acquisition et la poursuite au moins des signaux à accès libre, l'acquisition et la poursuite produisant des estimations de grandeurs brutes de radionavigation, et pour calculer une information de navigation sur la base des grandeurs brutes estimées ;
∘ un module de de communication sécurisée permettant au récepteur de communiquer avec un centre d'authentification.

Le processeur possède des ressources (comprenant, p.ex., une mémoire tampon) lui permettant d'enregistrer des clichés numériques au moins des signaux à accès sécurisé. Le processeur est en outre configuré pour transmettre au centre d'authentification l'information de navigation et/ou les grandeurs brutes estimées et pour recevoir du centre d'authentification une notification concernant l'authenticité de l'information de navigation et/ou des grandeurs brutes estimées transmises. Le récepteur est configuré pour opérer, de manière alternative, dans le premier mode de fonctionnement et dans le deuxième mode de fonctionnement :
∘ lorsque le récepteur se trouve dans le premier mode de fonctionnement, le processeur est configuré pour exploiter les ressources mentionnées ci-dessus pour enregistrer un cliché numérique et pour transmettre ce cliché numérique au centre d'authentification, ensemble avec l'information de navigation et/ou les grandeurs brutes estimées, le cliché numérique étant en relation temporelle définie avec l'information de navigation et/ou les grandeurs brutes transmises ;
∘ lorsque le récepteur se trouve dans le deuxième mode de fonctionnement, le processeur est configuré pour ne pas transmettre au centre d'authentification l'information de navigation et/ou les grandeurs brutes estimées sans les accompagner de cliché numérique.

De préférence, le processeur est configuré pour passer du premier mode de fonctionnement au deuxième mode de fonctionnement ou inversement à la survenance d'un événement enregistré comme devant déclencher un tel passage. Le processeur peut notamment être configuré pour passer du deuxième mode de fonctionnement au premier mode de fonctionnement à la survenance d'au moins un des événements suivants :
∘ réception d'une demande de passer au premier mode de fonctionnement issue par le centre d'authentification ;
∘ réception d'une notification de la part du centre d'authentification niant l'authenticité de l'information de navigation et/ou des grandeurs brutes estimées transmises ;
∘ détection d'une demande d'utilisateur (p. ex. entrée par une interface utilisateur) de vérifier l'authenticité de l'information de navigation ;
∘ détection qu'un ou plusieurs des signaux de radionavigation reçus ne satisfont pas à un critère de qualité prédéfini (p. ex. incertitude du positionnement dépassant un seuil) ;
∘ détection que la différence entre la solution PVT actuelle et la dernière solution PVT authentifiée par le centre d'authentification dépasse un seuil prédéfini.

Le processeur peut, par ailleurs, être configuré pour passer du premier mode de fonctionnement au deuxième mode de fonctionnement à la survenance d'au moins un des événements suivants :
∘ réception d'une demande de passer au deuxième mode de fonctionnement issue par le centre d'authentification ;
∘ réception d'une notification de la part du centre d'authentification affirmant l'authenticité de l'information de navigation et/ou des grandeurs brutes estimées transmises ;
∘ détection d'une demande d'utilisateur de ne plus vérifier l'authenticité de l'information de navigation ;
∘ détection que tous les signaux de radionavigation reçus satisfont à un critère de qualité prédéfini ;
∘ détection d'un faible niveau de réserve d'énergie.

Selon un mode de réalisation particulièrement préféré d'un récepteur selon l'invention, celui-ci passe du premier au deuxième mode de fonctionnement et inversement uniquement sur demande du centre d'authentification. Le processeur peut notamment être configuré pour se verrouiller dans le premier mode de fonctionnement sur demande du centre d'authentification. Le déverrouillage peut être conditionnel à une demande du centre d'authentification. Une telle configuration du système permet au centre d'authentification de contrôler le comportement de chaque récepteur avec lequel il est en communication. Une gestion centralisée du trafic de données est dès lors possible.

Selon un mode de réalisation avantageux de l'invention, le processeur est configuré pour désactiver, au moins partiellement, les ressources permettant de enregistrer des clichés numériques lorsqu'il passe du premier mode de fonctionnement au deuxième mode de fonctionnement. Les ressources peuvent comprendre du matériel (« hardware »), du logiciel (« software ») ou les deux. Cette fonctionnalité permettrait d'économiser de l'énergie et d'augmenter ainsi l'autonomie du récepteur. Il est également possible que le processeur affecte une autre tâche aux ressources libérées (à condition toutefois que les ressources en question soient multifonctionnelles).

Un troisième aspect de l'invention concerne un procédé de vérification de l'authenticité de signaux de radionavigation reçus par des récepteurs de signaux de radionavigation, chaque émetteur spécifique émettant au moins un signal à accès libre et un signal à accès sécurisé. Le procédé comprend les actions suivantes :
∘ la réception, par une un plusieurs voies de télécommunication sécurisées, d'informations de navigation et/ou de grandeurs brutes estimées de différents récepteurs de signaux de radionavigation, les informations de navigation et/ou les grandeurs brutes estimées étant accompagnées ou non par un cliché numérique au moins des signaux à accès sécurisé, chaque cliché numérique étant en relation temporelle définie avec l'information de navigation et/ou les grandeurs brutes qu'il accompagne ;
∘ [a] pour chaque jeu d'une information de navigation et/ou de grandeurs brutes accompagnés par un cliché numérique, la vérification si le cliché numérique est susceptible d'avoir été enregistré à la position et à la date renseignées par l'information de navigation et/ou dérivables des grandeurs brutes ;
   l'entrée du résultat au moins de chaque vérification positive dans un système d'information géographique ;
∘ [b] pour chaque jeu d'une information de navigation et/ou de grandeurs brutes non accompagnés par un cliché numérique, la vérification, à l'aide du système d'information géographique, si la position et la date renseignées par l'information de navigation et/ou dérivables des grandeurs brutes se trouvent dans un voisinage d'au moins une position et d'une date pour lesquels la vérification sub [a] était positive ;
∘ la transmission aux différents récepteurs de signaux de radionavigation, par une ou plusieurs voies de télécommunication sécurisées, d'une notification concernant l'authenticité de l'information de navigation et/ou des grandeurs brutes estimées respectivement transmises par ces récepteurs, ladite notification reflétant le résultat de la vérification sub [a] ou [b], selon le cas.

Il est entendu que le résultat d'une vérification sub [a] peut se réduire à l'information « fiable » ou « pas fiable » avec une indication de la date du cliché (et du lieu, ce dernier étant implicite dans un système d'information géographique) ou avec une date d'expiration. Dans le contexte de ce document, le terme de « date » réfère à une indication de temps, cette indication de temps n'étant pas limitée à une date de calendrier mais peut avoir une granularité beaucoup plus fine (de l'ordre d'une fraction de seconde, par exemple.) Le terme « système d'information géographique » réfère à un ensemble organisé de ressources (matériels et logiciels) conçu pour recueillir, stocker et traiter des informations géographiques.

Le procédé de vérification vérifie la cohérence entre le cliché numérique et l'information de navigation ou les grandeurs brutes transmis par les récepteurs opérant dans le premier mode de fonctionnement (vérification sub [a]).

Avantageusement, la vérification par le centre d'authentification comporte le calcul de l'information de navigation sur la base du cliché numérique transmis et la comparaison de cette information avec celle transmise par les récepteurs ou celles qui sont dérivables des grandeurs brutes que les récepteurs transmettent. Il convient de rappeler ici que le centre d'authentification a accès aux clés cryptographiques lui permettant de générer des répliques locales des signaux à accès sécurisé et donc de corréler ces répliques avec le cliché numérique. Dans un procédé en temps réel ou presque réel, la largeur de la plage de recherche temporelle est inférieure au temps de transmission maximal autorisé entre les récepteurs et le centre d'authentification. Pour réduire l'espace de recherche de corrélation, il est également possible que le centre d'authentification utilise le temps de réception renseigné par le récepteur comme point de départ de la recherche. Le centre d'authentification calcule p.ex. la position, la vitesse et le temps du récepteur à l'aide du cliché numérique transmis, ce qui correspond à une solution PVT obtenue uniquement à partir de signaux à accès sécurisé. Ensuite, il détermine si le résultat qu'il obtient ainsi correspond à l'information de navigation ou les grandeurs brutes transmis par le récepteur, dans les limites de tolérance. Si le centre d'authentification détecte que la différence entre la PVT obtenue à partir du cliché numérique et celle renseignée par le récepteur comme obtenue à partir des signaux à accès ouvert dépasse un seuil prédéfini, l'authentification du cliché ainsi que de l'information de navigation, respectivement des grandeurs brutes, est refusée par le centre d'authentification. Dans le cas contraire, ces données sont authentifiées. L'authentification est également refusée si le centre d'authentification ne parvient pas à calculer une information de navigation (p.ex. une solution PVT) à partir du cliché transmis pendant un temps maximal autorisé.

De manière alternative, la vérification sub [a] peut en principe être mise en oeuvre comme décrit dans les documents US 2014/0009336 A1 ou EP 2 708 917, c.-à-d. le centre d'authentification, qui qui a accès au clés cryptographiques pour générer des répliques locales des signaux GNSS cryptés, prend la position et la date renseignée par le récepteur de l'utilisateur ou déduit ces données à partir des grandeurs brutes et reconstruit des répliques des signaux cryptés que le récepteur aurait dû recevoir à la position et à la date indiquée. Le cliché est comparé à la réplique à l'aide d'une corrélation. En cas de détection d'un pic de corrélation d'une certaine ampleur, le cliché ainsi que l'information de navigation, respectivement les grandeurs brutes, sont identifiés comme authentiques.

En outre, le procédé de vérification valide les informations de navigation ou les grandeurs brutes transmises par les récepteurs opérant dans le deuxième mode de fonctionnement si elles ont été acquises dans le voisinage d'au moins une position et d'une date pour lesquels la vérification sub [a] était positive (vérification sub [b]). Une vérification sub [a] réussie entraîne donc, au niveau du système d'information géographique, la création d'une zone de confiance (ledit voisinage) dans laquelle les signaux GNSS sont réputés authentiques. Il convient de noter que ce voisinage comprend une étendue géographique ainsi qu'une étendue temporelle : une vérification sub [b] ne peut mener à un résultat positif que s'il y a proximité géographique et proximité temporelle entre les positions et les dates renseignées par les récepteurs. Le voisinage peut être défini en fonction de différents critères, notamment la probabilité d'une vérification positive erronée (paramètre à définir lors de la planification détaillée du système ou lors de son opération), la probabilité d'une vérification négative erronée (paramètre à définir lors de la planification détaillée du système ou lors de son opération), les circonstances géographiques (le voisinage pourrait être défini de manière différente en milieu urbain, en plaine, en montagne, au niveau de la mer, au-dessus du sol, selon le type de récepteur, etc.), le niveau de risque d'une attaque de leurrage (qui peut varier avec le lieu et dans le temps), etc. La définition du voisinage est considérée à la portée de l'homme du métier une fois les désidératas des utilisateurs et des exploitants du système définis.

De préférence, dans le procédé de vérification, l'occurrence d'une vérification sub [a] négative (indiquant qu'un leurrage n'est pas à exclure voire même manifeste) supplante les vérifications sub [a] positives antérieures dans son voisinage. Par conséquent, un récepteur opérant selon le deuxième mode de fonctionnement dans une zone actuellement identifiée comme « suspecte » ou « exposée à un leurrage » n'obtiendra pas automatiquement l'authentification de ses informations de navigation même si cette zone se trouve également dans le voisinage de vérifications sub [a] plus anciennes.

De préférence, le procédé de vérification comprend l'entrée, dans le système d'information géographique, de la position et de la date renseignées par l'information de navigation et/ou dérivables des grandeurs brutes de chaque récepteur (c.-à-d. également des récepteurs qui n'envoient pas de cliché numérique mais qui demandent une vérification sub [b]).

Selon un mode de réalisation particulièrement avantageux du procédé de vérification, l'action suivante est comprise :
∘ l'envoi, à des récepteurs sélectionnés, d'une demande de passer dans le premier mode de fonctionnement (dans lequel ces récepteurs enregistrent des clichés numériques au moins des signaux à accès sécurisé et communiquent leurs informations de navigation et/ou leurs grandeurs brutes estimées accompagnées par les clichés numériques respectifs.)

Le centre d'authentification peut, p.ex., être configuré de sorte à émettre une telle demande à un récepteur si le récepteur en question se trouve dans un endroit non couvert par un voisinage d'un récepteur se trouvant dans le premier mode de fonctionnement ou dans une zone identifiée comme (potentiellement) menacée par un leurre ou si le récepteur est bien positionné pour élargir la zone de couverture globale des zones de confiance.

Il est également possible que le procédé de vérification comprenne l'action :
∘ l'envoi, à des récepteurs sélectionnés, d'une demande de passer dans le deuxième mode de fonctionnement (dans lequel ces récepteurs communiquent leurs informations de navigation et/ou leurs grandeurs brutes estimées sans les accompagner par des clichés numériques.)

Une demande de passer du premier dans le deuxième mode de fonctionnement serait avantageusement transmise à un récepteur qui se trouve dans un endroit couvert par une ou plusieurs zones de confiance établies à l'aide de récepteurs voisins. Une autre situation dans laquelle le centre d'authentification peut être amené à émettre une telle demande pourrait être donnée si le centre d'authentification détecte une saturation ou un risque élevé de saturation du réseau de communication et/ou de ses capacités de traitement.

Si les récepteurs changent de mode de fonctionnement sous le contrôle du centre d'authentification, celui-ci peut optimiser l'emploi des ressources, avec comme objectif de couvrir au mieux l'ensemble des récepteurs reliés à lui par des zones de confiance. Par conséquent, le procédé de vérification comprend, de préférence, l'action :
∘ l'identification de récepteurs auxquels il sera demandé de passer dans le premier mode de fonctionnement, respectivement dans le deuxième mode de fonctionnement, à l'aide d'une routine visant à obtenir une couverture des positions actuelles des récepteurs par les voisinages prédéfinis sous la contrainte d'une minimisation de la charge sur ladite une ou plusieurs voies de télécommunication sécurisées et/ou sous la contrainte d'une minimisation des coûts de calcul des vérifications sub [a] et sub [b].

La couverture susmentionnée peut faire l'objet de certains critères de qualité, concernant par exemple l'espacement des récepteurs travaillant dans le premier mode de fonctionnement, le chevauchement des voisinages, la fiabilité du lien de communication entre les récepteurs et le centre d'authentification, le type de récepteur (des récepteurs d'un certain type pourraient être considérés plus fiables que d'autres), etc.

Selon un mode de réalisation avantageux de l'invention, le procédé de vérification comprend également le fait de contrôler à quelles dates les récepteurs opérant dans le premier mode de fonctionnement doivent acquérir leurs clichés numériques et les transmettre au centre d'authentification.

De préférence, le procédé de vérification comprend la détection d'un leurre et/ou l'estimation de la position d'un leurre.

Un quatrième aspect de l'invention concerne un centre d'authentification pour la vérification de l'authenticité de signaux de radionavigation reçus par des récepteurs de signaux de radionavigation, chaque émetteur émettant au moins un signal à accès libre et un signal à accès sécurisé. Le centre d'authentification est de préférence configuré pour mettre en oeuvre le procédé décrit ci-dessus.

Un centre d'authentification selon cet aspect de l'invention comprend :
∘ un ou plusieurs modules de communication sécurisée, permettant au centre d'authentification de recevoir des informations de navigation et/ou des grandeurs brutes estimées de différents récepteurs de signaux de radionavigation, les informations de navigation et/ou les grandeurs brutes estimées étant accompagnées ou non par un cliché numérique au moins des signaux à accès sécurisé, chaque cliché numérique étant en relation temporelle définie avec l'information de navigation et/ou les grandeurs brutes qu'il accompagne ;
∘ un système d'information géographique ;
∘ une unité de traitement informatique, intégrée ou non au système d'information géographique, configurée pour réaliser les opérations suivantes :
   [a] pour chaque jeu d'une information de navigation et/ou de grandeurs brutes accompagnés par un cliché numérique, la vérification si le cliché numérique est susceptible d'avoir été enregistré à la position et à la date renseignées par l'information de navigation et/ou dérivables des grandeurs brutes ;
      l'entrée du résultat au moins de chaque vérification positive dans le système d'information géographique ;
   [b] pour chaque jeu d'une information de navigation et/ou de grandeurs brutes non accompagnés par un cliché numérique, la vérification, par interrogation du système d'information géographique, si la position et la date renseignées par l'information de navigation et/ou dérivables des grandeurs brutes se trouvent dans un voisinage d'au moins une position et d'une date pour lesquels la vérification sub [a] était positive ; et
      la transmission aux différents récepteurs de signaux de radionavigation, par l'un ou les plusieurs modules de communication sécurisée, d'une notification concernant l'authenticité de l'information de navigation et/ou des grandeurs brutes estimées respectivement transmises par ces récepteurs, ladite notification reflétant le résultat de la vérification sub [a] ou [b], selon le cas.

De préférence, le centre d'authentification comprend un module cryptographique capable de produire des répliques des codes d'étalement des signaux à accès sécurisé des signaux GNSS, l'unité de traitement informatique étant configurée pour calculer une position et une date sur la base d'une corrélation entre un cliché numérique et les répliques de code d'étalement des signaux à accès sécurisé, l'unité de traitement informatique étant en outre configurée pour réaliser la vérification sub [a] sur la base d'une comparaison de la position et de la date calculées par elle-même avec la position et à la date renseignées par l'information de navigation et/ou dérivables des grandeurs brutes transmises par un récepteur.

De manière alternative, le centre d'authentification pourrait comprendre un corrélateur pour évaluer une fonction de corrélation entre un cliché numérique et une réplique de code d'étalement, l'unité de traitement informatique étant configurée pour réaliser la vérification sub [a] sur la base du résultat de l'évaluation de la fonction de corrélation. Alternativement, le module cryptographique et/ou le corrélateur ne font pas partie du centre d'authentification mais d'une entité à part. Dans ce cas, le centre d'authentification est de préférence relié à cette entité par le biais d'une voie de communication sécurisée. Il est également possible, bien que ce soit une réalisation moins préférée, que la vérification des clichés soit mise en oeuvre comme le décrit l'article « Signal Authentication - A Secure Civil GNSS for Today », c.-à-d. sur la base d'enregistrements des signaux cryptés.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
Fig. 1: une illustration schématique d'un système d'authentification de signaux GNSS mettant en oeuvre différents aspects de l'invention;
Fig. 2: le système de la figure 1 après changement du mode de fonctionnement de l'un des récepteurs ;
Fig. 3: le système de la figure 1 dans le cas d'une attaque de leurrage ;
Fig.4: un schéma de récepteur GNSS capable de changer de mode de fonctionnement dans le cadre d'une utilisation conforme à l'invention ;
Fig. 5: un ordinogramme illustrant les procédés se déroulant dans les récepteurs et dans le centre d'authentification, ainsi que la manière dont ces procédés interagissent.

### Description détaillée d'un mode de réalisation préféré de l'invention

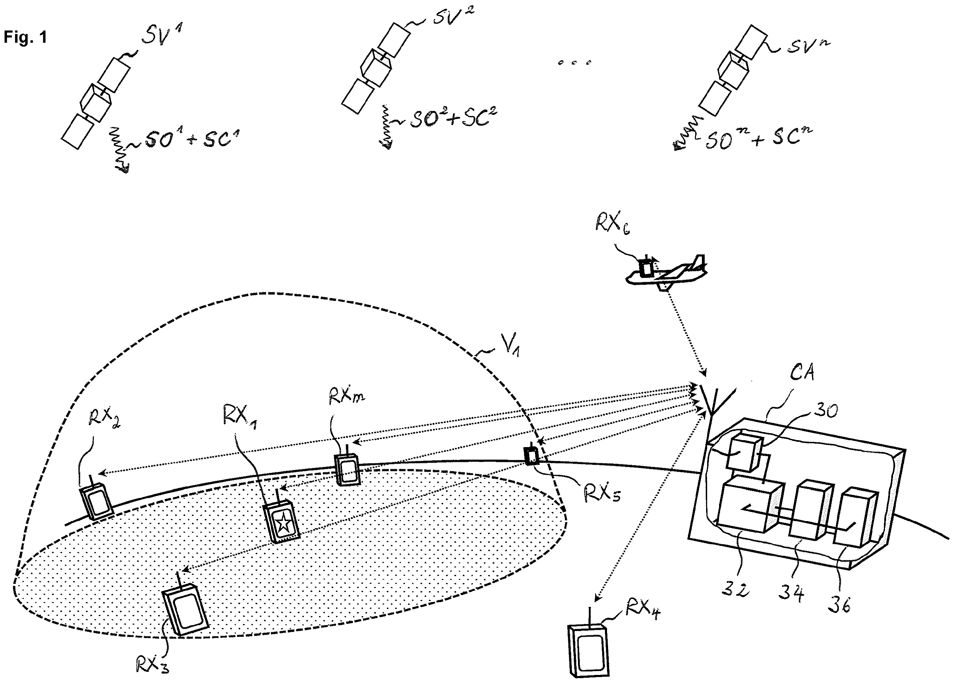

Les figures 1 à 3 montrent plusieurs satellites SV¹, SV², ... , SVⁿ d'un système de positionnement par satellites (GNSS). Chaque satellite SVⁱ (i = 1, ..., n) émet, sur une même fréquence porteuse, un premier signal de radionavigation SOⁱ (i = 1, ..., n) ouvert (c.-à-d. modulée par un code d'étalement non crypté) et un second signal SCⁱ (i = 1, ..., n) crypté (c.-à-d. modulée par un code d'étalement crypté). Le premier signal porte un code d'étalement dépendant du satellite émetteur ainsi qu'un message de navigation (avec des données almanach, éphémérides, temps d'émission, etc.) Les paramètres cryptographiques du second signal sont supposés inconnus aux récepteurs GNSS utilisateurs. Le centre d'authentification est supposé posséder, ou du moins avoir accès à, ces paramètres, ce qui lui permet de générer une réplique des codes d'étalement cryptés disponibles dans un lieu et à une date donnés.

Actuellement, le GPS américain émet un signal sur la fréquence L1 (1575,42 MHz) comportant le signal ouverte C/A et le signal crypté P(Y) en quadrature de phase l'un par rapport à l'autre. A l'avenir, le GNSS européen Galileo émettra le signal ouvert OS et le signal crypté PRS sur la fréquence L1. Une modification des signaux GNSS déjà utilisés ou planifiés n'est donc pas nécessaire pour la mise en oeuvre de l'invention.

Des récepteurs GNSS RX₁, RX₂, ..., RXₘ reçoivent la bande de radiofréquences contenant les signaux GNSS ouverts SOⁱ (i = 1, ..., n) émis par les satellites SVⁱ (i = 1, ..., n) respectivement « visibles » depuis les positions des récepteurs (« visible » signifiant au-dessus de l'horizon dans ce contexte). L'ensemble des signaux ouverts permettent aux récepteurs GNSS de produire des grandeurs brutes et de calculer leur solution PVT respective, en appliquant des procédés connus à cet effet.

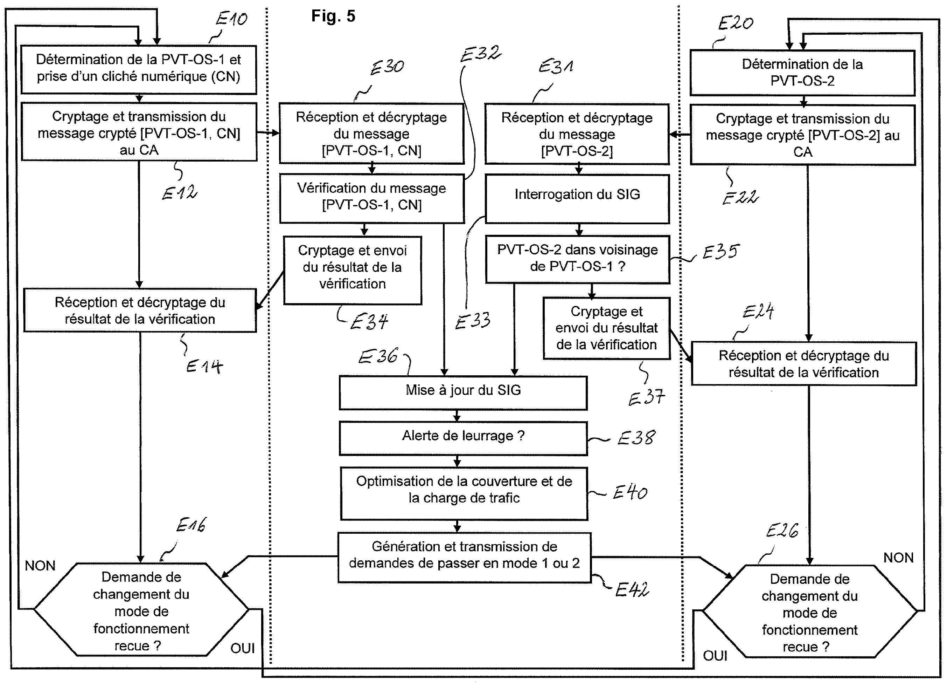

Chacun des récepteurs RXⱼ (j = 1, ..., m) possède la faculté d'opérer selon deux modes de fonctionnement au moins. Dans le premier mode de fonctionnement (illustré sur le côté gauche de la figure 5), le récepteur ne calcule pas seulement sa solution PVT, notée PVT-OS-1 à l'étape E10, mais numérise également les signaux cryptés SCⁱ (i = 1, ..., n) pendant un certain intervalle de temps (dont la durée est comprise, de préférence, entre 2 ms et 1 s, plus de préférence encore entre 2 ms et 100 ms). La bande passante de l'étage RF (en anglais : « RF front end ») et la fréquence d'échantillonnage sont choisies de sorte à ce que les signaux SCⁱ (i = 1, ..., n) soient convenablement représentés dans le domaine numérique. Dans le cas de la répartition spectrale actuelle des signaux GPS et Galileo, cela implique que les signaux ouverts sont également numérisés, à moins qu'ils ne soient retirés (par filtrage ou par soustraction) avant la numérisation, pendant ou après la prise du cliché.

Le cliché numérique (abrévié « CN » sur la figure 5) produit et la solution PVT correspondante sont ensuite assemblés dans un message (figure 5, étape E12), qui est crypté et envoyé à un centre d'authentification CA. Des informations complémentaires (comme par exemples les décalages Doppler mesurés) peuvent également être inclus dans le message.

Dans le second mode de fonctionnement, (illustré sur le côté droit de la figure 5), le récepteur ne prend pas de clichés numériques mais calcule seulement sa solution PVT (étape E20). De cette solution PVT (notée PVT-OS-2 sur la figure 5) le récepteur forme un message qui est ensuite encrypté et transmis au centre d'authentification CA (étape E22).

Aussi bien dans le premier que dans le deuxième mode de fonctionnement, le récepteur surveille la réception de messages contenant les résultats de vérification retournés par le centre d'authentification. A la réception d'un tel message, celui-ci est décrypté et le résultat de la vérification est extrait (étape E14, respectivement E24). En cas de vérification échouée, un avertissement correspondant peut être notifié à l'utilisateur. En outre, un récepteur peut être configuré de sorte à rester ou à passer dans le premier mode de fonctionnement suite à une authentification échouée et de procéder immédiatement aux étapes E10 et E12. Chaque récepteur surveille également la réception d'une demande de changement de mode de fonctionnement issue par le centre d'authentification (étapes E16, respectivement E26).

Le centre d'authentification traite les messages entrants selon leur type (PVT avec un cliché numérique joint ou PVT sans cliché numérique). A la réception d'un message, celui-ci est d'abord décrypté (étapes E30, respectivement E31 à la figure 5).

Dans le cas d'une solution PVT accompagnée d'un cliché numérique CN, le centre d'authentification procède à la vérification si le cliché numérique est susceptible d'avoir été enregistré à l'endroit et à la date renseignées par la solution PVT (étape E32). A cette fin, le centre d'authentification recherche quels satellites étaient visibles depuis la position et à la date alléguées (renseignées par la solution PVT). L'identification des satellites se fait sur la base des éphémérides ou autres données permettant de reconstruire l'orbite des satellites. Le centre d'authentification génère ensuite des répliques locales des codes d'étalement des signaux cryptés. Il utilise à cet effet un module cryptographique 36 (voir figures 1 à 3) auquel sont appliqués en entrée la date renseignée par la solution PVT, les numéros des satellites identifiés, et, si disponibles, les décalages Doppler correspondants. Les valeurs du décalage Doppler permettent de transposer les répliques du code d'étalement des signaux cryptés en fréquence de sorte à minimiser l'écart en fréquence entre chaque réplique et le signal correspondant enregistré dans cliché numérique. Une décision quant à l'authenticité de la solution PVT et du cliché numérique correspondant est prise par le centre d'authentification sur la base des considérations suivantes. La présence des signaux cryptés attendus dans le cliché numérique est un indicateur de l'authenticité de signaux GNSS reçus par le récepteur ayant enregistré le cliché numérique. Un signal crypté SCⁱ (i = 1, ..., n) est réputé détecté si le résultat de la corrélation entre la réplique de code correspondante et le cliché numérique dépasse un certain seuil prédéterminé. Comme il y a plusieurs signaux cryptés par cliché numérique, il peut arriver que certains des signaux attendus ne puissent être détectés par le centre d'authentification. Si un très haut niveau de sécurité (c.-à-d. une très faible probabilité d'authentification à tort) doit être assuré, le centre d'authentification sera configuré à rejeter le message comme non valide dans un tel cas. Une approche aussi stricte peut toutefois entraîner un taux d'échec d'authentification élevé non justifié. De préférence, le centre d'authentification est donc configuré pour adopter une approche plus souple qui tient compte des différents résultats de corrélation et en déduit un indicateur global de l'authenticité. On note qu'une réduction de la probabilité de fausse authentification (authentification à tort) est inévitablement accompagnée d'une augmentation de la probabilité d'une authentification manquée à tort. Le seuil en dessous duquel l'authentification est considérée échouée représente donc un compromis, qui est ajusté en fonction des besoins des utilisateurs du système. Il convient de noter que pour trouver un pic de corrélation entre une réplique locale et le cliche numérique, un balayage en terme de décalage de code et/ou de décalage Doppler peut s'avérer nécessaire pour prendre en compte les incertitudes de la solution PVT, des temps de parcours des signaux GNSS, des valeurs du décalage Doppler, etc.

Le résultat de la vérification d'un message contenant une solution PVT et un cliché numérique correspondant est crypté par le centre d'authentification CA et transmis au récepteur RXⱼ à l'origine du message (étape E34). Le résultat de la vérification est également introduit dans un système d'information géographique SIG (étape E36). De préférence, l'indicateur global de l'authenticité ou même les résultats des corrélations individuelles sont également introduits dans le système d'information géographique SIG.

Si le centre d'authentification CA reçoit un message contenant une solution PVT qui n'est pas accompagnée d'un cliché numérique CN, l'authenticité des signaux GNSS est vérifiée à l'aide du système d'information géographique SIG. En particulier, le centre d'authentification CA interroge le système d'information géographique SIG (étape E33) afin de déterminer si la solution PVT du message se trouve dans le voisinage (dans une zone de confiance autour) d'une solution PVT authentifiée à l'aide d'un cliché numérique (étape E35). Dans l'affirmative, le centre d'authentification considère qu'il y a un faible risque de leurrage et confirme donc l'authenticité des signaux au lieu et à la date de la PVT contenue dans le message. La notion de « voisinage » ou « zone de confiance » est étroitement liée aux niveaux de risque acceptables pour une fausse vérification positive ou une fausse vérification négative. Il s'agit là de paramètres à définir lors de la planification du système, en fonction des désidératas des utilisateurs et de l'exploitant. Au lieu de sortir comme résultat de la vérification un « échec » ou une « réussite », il est possible dans une réalisation alternative que le centre d'authentification calcule les niveaux de risque en tant que résultat de la vérification. La définition de voisinage pourra également tenir compte d'autres paramètres, comme des circonstances géographiques, du niveau de confiance associé à la solution PVT authentifiée à l'aide d'un cliché numérique (renseigné p.ex. par l'indicateur global de l'authenticité mentionné plus haut ou les résultats des corrélations individuelles ou encore les localisations et/ou étendues des leurres identifiés par le centre d'authentification.)

Le résultat de la vérification d'un message contenant une solution PVT sans cliché numérique correspondant est crypté par le centre d'authentification CA et transmis au récepteur RXⱼ à l'origine du message (étape E37). En parallèle, le résultat de la vérification est introduit dans le système d'information géographique SIG (étape E36). Eventuellement, le centre d'authentification stocke également les relations entre les solutions PVT sans cliché numérique et les solutions avec cliché numérique, notamment quelle(s) solution(s) avec cliché numérique a (ont) permis de confirmer l'authenticité des signaux au lieu et à la date des PVT sans cliché numérique. Chaque PVT (avec ou sans cliché numérique) est en outre référencée dans le système d'information géographique au récepteur l'ayant produite. Le SIG (ou le centre d'authentification) connait ainsi les positions passées et actuelles des récepteurs avec lesquels le centre d'authentification est en contact.

Le centre d'authentification surveille en permanence si une attaque de leurrage survient dans le territoire couvert (étape E38). A cette fin, le centre d'authentification implémente une heuristique ou autre algorithme qui surveille les résultats des vérifications individuelles et le comportement des récepteurs tels qu'ils sont répertoriés dans le système d'information géographique. La détection d'un comportement étrange ou d'un échec d'une vérification peut amener le centre d'authentification à déclencher une alerte pour la zone géographique concernée. De préférence, il existe plusieurs seuils, comme p.ex. un seuil de vigilance qui est dépassé en cas d'irrégularité moindre (p.ex. une authentification manquée isolée), un seuil de préalerte qui est dépassé en cas d'une irrégularité plus importante (p.ex. une dérive commune inattendue de plusieurs récepteurs dans une zone géographique, une accumulation d'authentifications manquées, etc.) et un seuil d'alerte (correspondant à la confirmation d'une attaque de leurrage à un certain endroit). Le centre d'authentification est configuré de sorte à réagir face à de telles situations de manière flexible, notamment en demandant à des récepteurs de changer de mode de fonctionnement (étape E42). Par exemple, dans le cas d'une authentification manquée d'un message provenant d'un premier récepteur opérant selon le premier mode de fonctionnement, le centre d'authentification peut demander à un deuxième récepteur dans le voisinage du premier de changer également dans le premier mode de fonctionnement afin que le centre d'authentification puisse vérifier si l'authentification manquée est due à un dysfonctionnement du premier récepteur ou si l'irrégularité est également constatée par le deuxième récepteur. Le centre d'authentification peut déjà localiser une attaque de leurrage de manière grossière si un seul récepteur est affecté. Par le fait de demander à des récepteurs géographiquement proches d'un récepteur concerné de passer dans le premier mode de fonctionnement, le centre d'authentification pourra augmenter la précision de la localisation de l'attaque et/ou en déterminer l'étendue géographique.

Le centre d'authentification est en outre configuré de sorte à couvrir le mieux possible les récepteurs qui sont en contact avec lui par des voisinages sécurisés au centre desquels se trouve à chaque fois un récepteur opérant selon le premier mode de fonctionnement (étape E40). Accessoirement, le centre d'authentification essaie de minimiser la charge de trafic sur les voies de communication sécurisée entre les récepteurs et le centre d'authentification.

La figure 1 montre une configuration avec plusieurs récepteurs GNSS répartis sur une zone géographique. Le récepteur RX₁ se trouve dans le premier mode de fonctionnement et envoie donc au centre d'authentification des messages contenant sa solution PVT et un cliché numérique des signaux cryptés SC¹, ..., SCⁿ qu'il intercepte. Tant que le centre d'authentification CA peut confirmer l'authenticité des messages que le récepteur RX₁ envoie, le voisinage V₁ du récepteur RX₁ est considéré comme sécurisé (c.-à-d. non atteint par du leurrage). Par conséquent, le centre d'authentification CA demande aux récepteurs qui se trouvent dans le voisinage V₁ (c.-à-d. les récepteurs RX₃ et RXₘ) de se placer dans le deuxième mode de fonctionnement. Ces récepteurs n'envoient dès lors que leur solution PVT au centre d'authentification CA, qui leur confirme que les signaux GNSS sont authentiques à l'endroit où ils se trouvent.

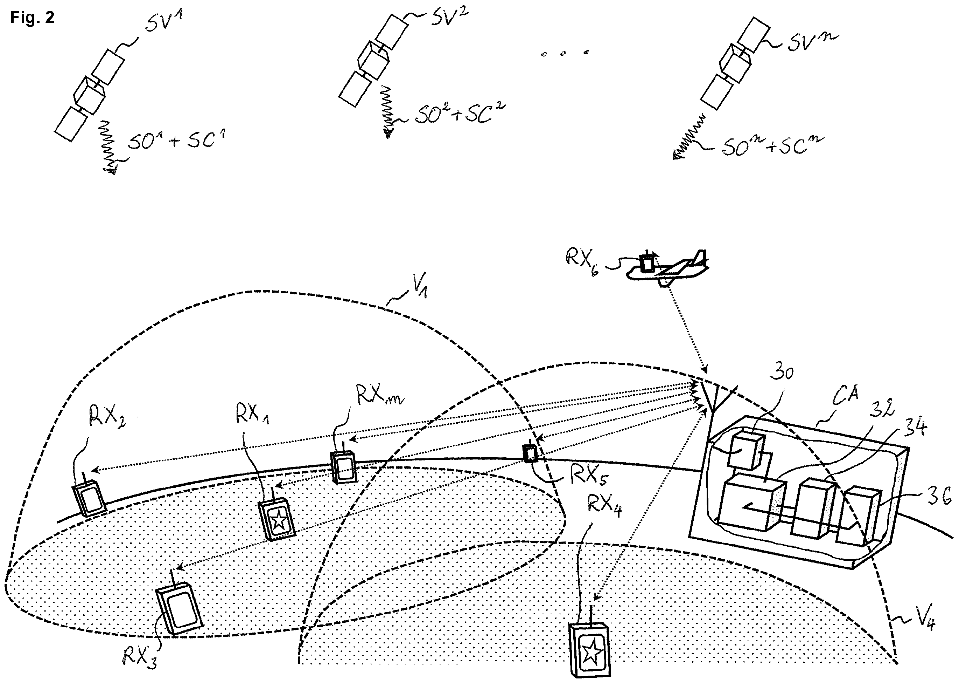

Si un récepteur se trouve hors de tout voisinage sécurisé, le centre d'authentification peut lui demander de passer dans le premier mode de fonctionnement et devenir le centre d'un nouveau voisinage sécurisé (cas du récepteur RX₄ sur la figure 2.) De cette façon, la couverture totale des voisinages sécurisés V₁, V₄ est élargie. Le choix des récepteurs GNSS devant fonctionner selon le premier mode de fonctionnement est fait par le centre d'authentification. Celui-ci tient compte des positions de tous les récepteurs RXⱼ (j = 1, ..., m) avec lesquels il est en communication et choisit les récepteurs à placer dans le premier mode de fonctionnement de sorte à obtenir une couverture conforme aux critères de qualité y relatifs tout en minimisant, dans les limites de cette contrainte, la charge sur les voies de communication.

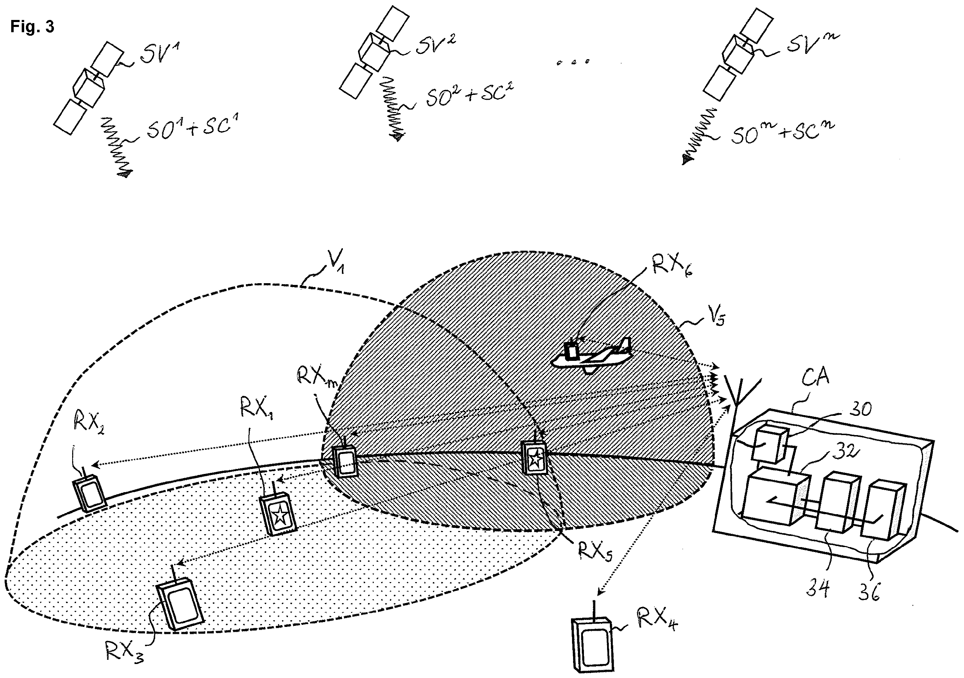

Lorsque le centre d'authentification CA constate un comportement étrange d'un récepteur, il peut demander à ce récepteur de se placer dans le premier mode de fonctionnement (cas du récepteur RX₅ de la figure 3.) Si la vérification du message contenant la solution PVT et le cliché numérique envoyé par ce récepteur RX₅ échoue, le cas échéant à plusieurs reprises, le voisinage V₅ de celui-ci sera considéré comme atteint de leurrage. Le centre d'authentification CA enregistre l'attaque de leurrage dans le système d'information géographique et émet une alerte correspondante au moins aux récepteurs RX₆, RXₘ se trouvant dans le voisinage V₅. En cas de chevauchement du voisinage V₅ atteint de leurrage et d'un voisinage considéré comme sécurisé V₁, la zone de chevauchement sera au moins provisoirement considérée comme atteinte par le leurrage et le centre d'authentification ne confirmera provisoirement plus l'authenticité des signaux aux récepteurs localisés dans la zone de chevauchement et travaillant dans le deuxième mode de fonctionnement (sur la figure 3, ceci est le cas du récepteur RXₘ). Afin d'obtenir plus d'informations concernant la zone atteinte, le centre d'authentification CA pourra demander au récepteurs voisins RX₆ et RXₘ de passer dans le premier mode de fonctionnement. Après vérification des clichés numériques envoyés par ces récepteurs, l'attaque de leurrage pourra soit être confirmée et localisée plus précisément soit être infirmée.

L'authentification des clichés numériques repose sur l'imprévisibilité du signal crypté par une personne malintentionnée. Il sera donc impossible pour un attaquant de contrefaire le signal crypté en temps réel ou presque réel. Cette propriété est exploitée dans le cadre de l'invention pour distinguer un signal d'origine d'une version contrefaite.

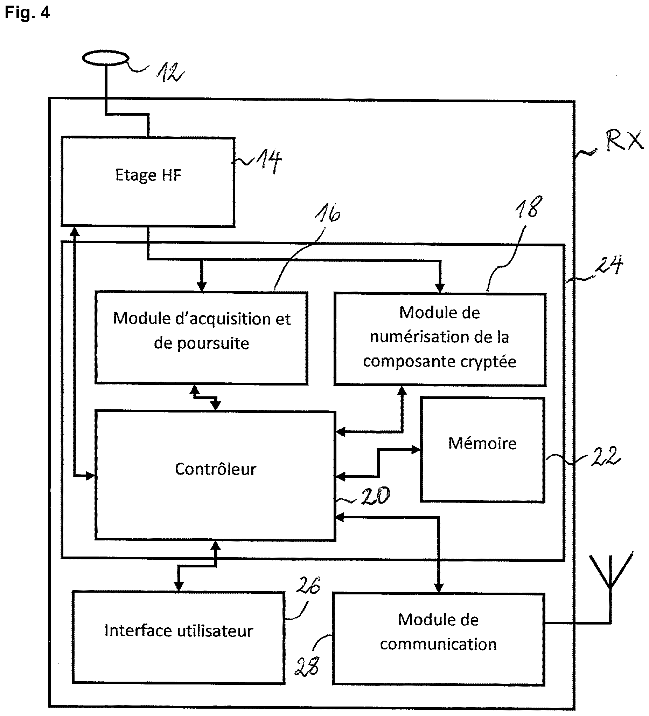

L'architecture globale d'un récepteur GNSS RX configuré pour fonctionner conformément à l'invention est présentée à la figure 4. Le récepteur comprend une antenne 12 (p.ex. une antenne patch) pour recevoir les signaux GNSS, un étage RF (« RF front end ») large bande 14 et une chaîne de traitement du signal, qui comprend notamment un module d'acquisition et de poursuite des signaux ouverts 16 et un module de numérisation des signaux cryptés 18. L'étage RF 14 a pour fonction de réceptionner le signal global (c.-à-d. la bande de fréquences occupée par les signaux ouverts et les signaux cryptés), de le filtrer, puis de le descendre en fréquence. La conversion analogique-numérique est supposée être faite par le module d'acquisition et de poursuite 16, respectivement le module de numérisation des signaux cryptés 18. La fréquence d'échantillonnage est à chaque fois choisie suffisamment haute pour que le théorème de Nyquist-Shannon soit respecté pour le signal concerné (c.-à-d. égale ou supérieure au double de la largeur de la bande de fréquences à numériser). Les modules 16 et 18 peuvent être intégrés dans un processeur de signaux numériques (DSP, « digital signal processor »), un circuit intégré spécifique à l'application (ASIC, « application-specific integrated circuit »), un processeur de type FPGA (de l'anglais « field-programmable gate array », réseau de portes programmables in situ), etc. Un contrôleur 20 (typiquement un microcontrôleur ou un microprocesseur polyvalent) contrôle l'étage RF ainsi que la chaîne de traitement du signal et assure notamment que le processeur opère dans le mode de fonctionnement désiré. Le contrôleur 20 est connecté à un module de mémoire rémanente 22 (p.ex. de type flash, disque dur classique ou autre.) L'ensemble des composantes 16, 18, 20, 22 est appelé « processeur » 24 dans le contexte de ce document. Le processeur 24 est relié à une interface utilisateur 26 (clavier, écran, écran tactile, boutons de commande, etc.) et un module de communication 28 (module Wifi, GSM, UMTS, EDGE, GPRS, Ethernet et/ou autre) pour la communication avec le centre d'authentification.

L'architecture du centre d'authentification CA est illustrée de manière sommaire sur les figures 1 à 3. Le centre d'authentification CA comprend un ou plusieurs modules de communication 30 (de type Wifi, GSM, UMTS, EDGE, GPRS, Ethernet et/ou autre), une unité de traitement informatique 32 (un ou plusieurs ordinateurs ou serveurs), un système d'information géographique 34 et un module cryptographique 36 qui permet de générer des répliques des code d'étalement des signaux cryptés en fonction du numéro du satellite et de la date de réception.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention.

## Revendications

1. Procédé de traitement de signaux de radionavigation, destiné à être mis en oeuvre par un récepteur (RXj) de signaux de radionavigation, comprenant la réception d'une ou de plusieurs bandes de radiofréquences contenant un ensemble de signaux de radionavigation, dont chacun provient d'un émetteur (SVⁱ) spécifique, chaque émetteur (SVⁱ) émettant au moins un signal à accès libre (SOⁱ) et un signal à accès sécurisé (SCⁱ) ;
l'estimation de grandeurs brutes de radionavigation, dont au moins des pseudo-distances et optionnellement des phases, des décalages Doppler, etc. à partir au moins des signaux à accès libre ;
le calcul d'une information de navigation (PVT) (E10, E20) sur la base des grandeurs brutes estimées ;
la communication (E12, E22) avec un centre d'authentification (CA) par une voie de communication sécurisée, ladite communication comprenant la transmission de l'information de navigation et/ou des grandeurs brutes estimées au centre d'authentification (CA) et la réception du centre d'authentification (CA) d'une notification concernant l'authenticité de l'information de navigation et/ou des grandeurs brutes estimées transmises (E14, E24);
le procédé étant **caractérisé par** un premier mode de fonctionnement et un deuxième mode de fonctionnement du récepteur, le procédé comprenant :
dans le premier mode de fonctionnement du récepteur (RXj) de signaux de radionavigation, l'enregistrement d'un cliché (E10) numérique au moins des signaux à accès sécurisé et la transmission (E12) de ce cliché numérique au centre d'authentification (CA) ensemble avec l'information de navigation et/ou les grandeurs brutes estimées, le cliché numérique étant en relation temporelle définie avec l'information de navigation et/ou les grandeurs brutes transmises ; dans le deuxième mode de fonctionnement du récepteur (RXj) de signaux de radionavigation, la transmission (E22), au centre d'authentification (CA), de l'information de navigation et/ou des grandeurs brutes estimées sans les accompagner de cliché numérique.

2. Récepteur (RXj) de signaux de radionavigation, comprenant un étage RF (14) pour recevoir une ou plusieurs bandes de radiofréquences contenant un ensemble de signaux de radionavigation, dont chacun provient d'un émetteur spécifique (SVⁱ), chaque émetteur (SVⁱ) émettant au moins un signal à accès libre (SOⁱ) et un signal à accès sécurisé (SCⁱ) ;
un processeur, relié à l'étage RF (14), configuré pour l'acquisition et la poursuite au moins des signaux à accès libre, l'acquisition et la poursuite produisant des estimations de grandeurs brutes de radionavigation, et pour calculer une information de navigation sur la base des grandeurs brutes estimées ;
le processeur ayant en outre des ressources permettant d'enregistrer des clichés numériques au moins des signaux à accès sécurisé ;
un module de communication (28) sécurisée permettant au récepteur (RXj) de communiquer avec un centre d'authentification (CA), le processeur étant configuré pour transmettre au centre d'authentification (CA) l'information de navigation et/ou les grandeurs brutes estimées et pour recevoir du centre d'authentification (CA) une notification concernant l'authenticité de l'information de navigation et/ou des grandeurs brutes estimées transmises ; **caractérisé en ce que** le récepteur (RXj) est configuré pour opérer, de manière alternative, dans un premier mode de fonctionnement et dans un deuxième mode de fonctionnement :
le processeur, lorsque le récepteur (RXj) se trouve dans le premier mode de fonctionnement, étant configuré pour exploiter lesdites ressources pour enregistrer un cliché numérique et pour transmettre ce cliché numérique au centre d'authentification (CA), ensemble avec l'information de navigation et/ou les grandeurs brutes estimées, le cliché numérique étant en relation temporelle définie avec l'information de navigation et/ou les grandeurs brutes transmises ;
le processeur, lorsque le récepteur (RXj) se trouve dans le deuxième mode de fonctionnement, étant configuré pour ne pas exploiter lesdites ressources pour enregistrer un cliché numérique et pour transmettre au centre d'authentification (CA) l'information de navigation et/ou les grandeurs brutes estimées sans les accompagner de cliché numérique.

3. Récepteur (RXj) de signaux de radionavigation selon la revendication 2, **caractérisé en ce que** le processeur est configuré pour passer du premier mode de fonctionnement au deuxième mode de fonctionnement ou inversement à la survenance d'un événement enregistré comme devant déclencher un tel passage.

4. Récepteur (RXj) de signaux de radionavigation selon la revendication 3, **caractérisé en ce que** le processeur est configuré pour passer du deuxième mode de fonctionnement au premier mode de fonctionnement à la survenance d'au moins un des événements suivants :
Réception d'une demande de passer au premier mode de fonctionnement issue par le centre d'authentification (CA) ;
Réception d'une notification de la part du centre d'authentification (CA) niant l'authenticité de l'information de navigation et/ou des grandeurs brutes estimées transmises ;
Détection d'une demande d'utilisateur de vérifier l'authenticité de l'information de navigation ;
Détection qu'un ou plusieurs des signaux de radionavigation reçus ne satisfont pas à un critère de qualité prédéfini ;
Détection que la différence entre la solution PVT actuelle et la dernière solution PVT authentifiée par le centre d'authentification (CA) dépasse un seuil prédéfini.

5. Récepteur (RXj) de signaux de radionavigation selon la revendication 3 ou 4, **caractérisé en ce que** le processeur est configuré pour passer du premier mode de fonctionnement au deuxième mode de fonctionnement à la survenance d'au moins un des événements suivants :
Réception d'une demande de passer au deuxième mode de fonctionnement issue par le centre d'authentification (CA) ;
Réception d'une notification de la part du centre d'authentification (CA) affirmant l'authenticité de l'information de navigation et/ou des grandeurs brutes estimées transmises ;
Détection d'une demande d'utilisateur de ne plus vérifier l'authenticité de l'information de navigation ;
Détection que tous les signaux de radionavigation reçus satisfont à un critère de qualité prédéfini ;
Détection d'un faible niveau de réserve d'énergie.

6. Récepteur (RXj) de signaux de radionavigation selon la revendication 3 ou 4, **caractérisé en ce que** le processeur est configuré pour se verrouiller dans le premier mode de fonctionnement sur demande du centre d'authentification (CA).

7. Récepteur (RXj) de signaux de radionavigation selon la revendication 2 ou 3, **caractérisé en ce que** le processeur est configuré pour désactiver, au moins partiellement, lesdites ressources permettant d'enregistrer des clichés numériques lorsqu'il passe du premier mode de fonctionnement au deuxième mode de fonctionnement.

8. Procédé de vérification de l'authenticité de signaux de radionavigation reçus par des récepteurs (RXⱼ) de signaux de radionavigation, chaque émetteur (SVⁱ) spécifique émettant au moins un signal à accès libre (SOⁱ) et un signal à accès sécurisé (SCⁱ), le procédé étant **caractérisé par** les actions :
la réception (E20, E31), par une ou plusieurs voies de télécommunication sécurisées, d'informations de navigation et/ou de grandeurs brutes estimées de différents récepteurs (RXⱼ) de signaux de radionavigation, les informations de navigation et/ou les grandeurs brutes estimées étant accompagnées ou non par un cliché numérique (CN) au moins des signaux à accès sécurisé, chaque cliché numérique étant en relation temporelle définie avec l'information de navigation et/ou les grandeurs brutes qu'il accompagne ;
[a] pour chaque jeu d'une information de navigation et/ou de grandeurs brutes accompagnés par un cliché numérique, la vérification (E32) si le cliché numérique est susceptible d'avoir été enregistré à la position et à la date renseignées par l'information de navigation et/ou dérivables des grandeurs brutes ;
l'entrée E36) du résultat au moins de chaque vérification positive dans un système d'information géographique (34) ;
[b] pour chaque jeu d'une information de navigation et/ou de grandeurs brutes non accompagnés par un cliché numérique, la vérification (E33), à l'aide du système d'information géographique (34), si la position et la date renseignées par l'information de navigation et/ou dérivables des grandeurs brutes se trouvent dans un voisinage d'au moins une position et d'une date pour lesquels la vérification sub [a] était positive ;
la transmission (E34, E37) aux différents récepteurs (RXⱼ) de signaux de radionavigation, par une ou plusieurs voies de télécommunication sécurisées, d'une notification concernant l'authenticité de l'information de navigation et/ou des grandeurs brutes estimées respectivement transmises par ces récepteurs (RXⱼ), ladite notification reflétant le résultat de la vérification sub [a] ou [b], selon le cas.

9. Procédé selon la revendication 8, **caractérisé en ce qu'**il comprend :
l'entrée (E36) dans le système d'information géographique (34) de la position et de la date renseignées par l'information de navigation et/ou dérivables des grandeurs brutes de chaque récepteur (RXj).

10. Procédé selon la revendication 9, **caractérisé en ce qu'**il comprend :
l'envoi, à des récepteurs sélectionnés, d'une demande (E42) de passer dans un premier mode de fonctionnement, dans lequel ces récepteurs enregistrent des clichés numériques au moins des signaux à accès sécurisé et communiquent leurs informations de navigation et/ou leurs grandeurs brutes estimées accompagnées par les clichés numériques respectifs.

11. Procédé selon les revendications 9 ou 10, **caractérisé en ce qu'**il comprend :
l'envoi, à des récepteurs sélectionnés, d'une demande (E42) de passer dans un deuxième mode de fonctionnement dans lequel ces récepteurs communiquent leurs informations de navigation et/ou leurs grandeurs brutes estimées sans les accompagner par des clichés numériques.

12. Procédé selon les revendications 9, 10 et 11, **caractérisé en ce qu'**il comprend :
l'identification de récepteurs auxquels il sera demandé de passer dans le premier mode de fonctionnement, respectivement dans le deuxième mode de fonctionnement, à l'aide d'une routine visant à obtenir une couverture des positions actuelles des récepteurs par les voisinages prédéfinis sous la contrainte d'une minimisation de la charge sur ladite une ou plusieurs voies de télécommunication sécurisées et/ou sous la contrainte d'une minimisation des coûts de calcul des vérifications sub [a] et sub [b] (E40).

13. Procédé selon l'une quelconque des revendications 9 à 12, **caractérisé en ce qu'**il comprend la détection d'un leurre et/ou l'estimation de la position d'un leurre (E38).

14. Centre d'authentification (CA) pour la vérification de l'authenticité de signaux de radionavigation reçus par des récepteurs (RXⱼ) de signaux de radionavigation, chaque émetteur (SVⁱ) spécifique émettant au moins un signal à accès libre (SOⁱ) et un signal à accès sécurisé (SCⁱ), le centre d'authentification (CA) comprenant :
un ou plusieurs modules de communication (30) sécurisée, permettant au centre d'authentification (CA) de recevoir des informations de navigation et/ou des grandeurs brutes estimées de différents récepteurs (RXⱼ) de signaux de radionavigation, les informations de navigation et/ou les grandeurs brutes estimées étant accompagnées ou non par un cliché numérique (CN) au moins des signaux à accès sécurisé, chaque cliché numérique étant en relation temporelle définie avec l'information de navigation et/ou les grandeurs brutes qu'il accompagne ;
un système d'information géographique (34) ;
une unité de traitement informatique (32), intégrée ou non au système d'information géographique (34), configurée pour réaliser les opérations suivantes :
[a] pour chaque jeu d'une information de navigation et/ou de grandeurs brutes accompagnés par un cliché numérique, la vérification si le cliché numérique est susceptible d'avoir été enregistré à la position et à la date renseignées par l'information de navigation et/ou dérivables des grandeurs brutes ;
l'entrée du résultat au moins de chaque vérification positive dans le système d'information géographique (34) ;
[b] pour chaque jeu d'une information de navigation et/ou de grandeurs brutes non accompagnés par un cliché numérique, la vérification, par interrogation du système d'information géographique (34), si la position et la date renseignées par l'information de navigation et/ou dérivables des grandeurs brutes se trouvent dans un voisinage d'au moins une position et d'une date pour lesquels la vérification sub [a] était positive ; et
la transmission aux différents récepteurs (RXⱼ) de signaux de radionavigation, par l'un ou les plusieurs modules de communication sécurisée, d'une notification concernant l'authenticité de l'information de navigation et/ou des grandeurs brutes estimées respectivement transmises par ces récepteurs (RXⱼ), ladite notification reflétant le résultat de la vérification sub [a] ou [b], selon le cas.

15. Centre d'authentification (CA) selon la revendication 14, **caractérisé en ce qu'**il comprend un module cryptographique (36) capable de produire des répliques des codes d'étalement des signaux à accès sécurisé des signaux de radionavigation, l'unité de traitement informatique (32) étant configurée pour calculer une position et une date sur la base d'une corrélation entre un cliché numérique et les répliques de code d'étalement des signaux à accès sécurisé, l'unité de traitement informatique (32) étant en outre configurée pour réaliser la vérification sub [a] sur la base d'une comparaison de la position et de la date calculées par elle-même avec la position et à la date renseignées par l'information de navigation et/ou dérivables des grandeurs brutes transmises par un récepteur (RXj).

16. Centre d'authentification (CA) selon la revendication 14 ou 15, **caractérisé en ce qu'**il est configuré pour mettre en oeuvre le procédé selon l'une quelconque des revendications 8 à 13.

## Patentansprüche

1. Verfahren zur Verarbeitung von Funknavigationssignalen, das dazu bestimmt ist, von einem Empfänger (RXj) von Funknavigationssignalen umgesetzt zu werden, umfassend
den Empfang eines oder mehrerer Funkfrequenzbänder, die eine Einheit von Funknavigationssignalen enthalten, von welchen jedes von einem spezifischen Sender (SVⁱ) kommt, wobei jeder Sender (SVⁱ) mindestens ein Signal mit freiem Zugriff (SOⁱ) und ein Signal mit gesichertem Zugriff (SCⁱ) sendet;
das Schätzen von Funknavigations-Rohgrößen, darunter mindestens Pseudo-Distanzen und optional Phasen, Doppler-Verschiebungen usw., ausgehend von mindestens den Signalen mit freiem Zugriff;
die Berechnung einer Navigationsinformation (PVT) (E10, E20) auf der Basis der geschätzten Rohgrößen;
die Kommunikation (E12, E22) mit einem Authentifizierungszentrum (CA) über einen gesicherten Kommunikationskanal, wobei die Kommunikation die Übertragung der Navigationsinformation und/oder der geschätzten Rohgrößen zu dem Authentifizierungszentrum (CA) und den Empfang von dem Authentifizierungszentrum (CA) einer Bekanntgabe in Zusammenhang mit der Authentizität der übertragenen Navigationsinformation und/oder geschätzten Rohgrößen (E14, E24) umfasst;
wobei das Verfahren **gekennzeichnet ist durch** einen ersten Betriebsmodus und einen zweiten Betriebsmodus des Empfängers, wobei das Verfahren Folgendes umfasst:
in dem ersten Betriebsmodus des Empfängers (RXj) von Funknavigationssignalen, das Aufzeichnen einer digitalen Darstellung (E10) mindestens der Signale mit gesichertem Zugriff, und die Übertragung (E12) dieser digitalen Darstellung zu dem Authentifizierungszentrum (CA) gemeinsam mit der Navigationsinformation und/oder den geschätzten Rohgrößen, wobei die digitale Darstellung in definierter zeitlicher Beziehung mit der Navigationsinformation und/oder den übertragenen Rohgrößen steht;
in dem zweiten Betriebsmodus des Empfängers (RXj) von Funknavigationssignalen, die Übertragung (E22) zu dem Authentifizierungszentrum (CA) der Navigationsinformation und/oder der geschätzten Rohgrößen, ohne sie mit einer digitalen Darstellung zu begleiten.

2. Empfänger (RXj) von Funknavigationssignalen, der eine HF-Stufe (14) umfasst, um ein oder mehrere Funkfrequenzbänder zu empfangen, die eine Einheit von Funknavigationssignalen enthalten, von welchen jedes von einem spezifischen Sender (SVⁱ) kommt, wobei jeder Sender (SVⁱ) mindestens ein Signal mit freiem Zugriff (SOⁱ) und ein Signal mit gesichertem Zugriff (SCⁱ) sendet;
einen Prozessor, der mit der HF-Stufe (14) verbunden ist, der für die Erfassung und die Verfolgung mindestens der Signale mit freiem Zugriff konfiguriert ist, wobei die Erfassung und die Verfolgung Schätzungen von Funknavigations-Rohgrößen erzeugt, und um eine Navigationsinformation auf der Basis der geschätzten Rohgrößen zu berechnen;
wobei der Prozessor außerdem Ressourcen hat, die es erlauben, digitale Darstellungen mindestens der Signale mit gesichertem Zugriff aufzuzeichnen;
ein gesichertes Kommunikationsmodul (28), das es dem Empfänger (RXj) erlaubt, mit dem Authentifizierungszentrum (CA) zu kommunizieren,
wobei der Prozessor konfiguriert ist, um zu dem Authentifizierungszentrum (CA) die Navigationsinformation und/oder die geschätzten Rohgrößen zu übertragen, und um von dem Authentifizierungszentrum (CA) eine Bekanntgabe in Zusammenhang mit der Authentizität der Navigationsinformation und/oder der übertragenen geschätzten Rohgrößen zu empfangen;
**dadurch gekennzeichnet, dass** der Empfänger (RXj) konfiguriert ist, um alternativ in einem ersten Betriebsmodus und in einem zweiten Betriebsmodus zu arbeiten:
wobei der Prozessor, wenn sich der Empfänger (RXj) in dem ersten Betriebsmodus befindet, konfiguriert ist, um die Ressourcen zu nutzen, um eine digitale Darstellung aufzuzeichnen oder um diese digitale Darstellung zu dem Authentifizierungszentrum (CA) gemeinsam mit der Navigationsinformation und/oder den geschätzten Rohgrößen zu übertragen, wobei die digitale Darstellung in definierter zeitlicher Beziehung mit der Navigationsinformation und/oder den übertragenen Rohgrößen steht;
wobei der Prozessor, wenn der Empfänger (RXj) in dem zweiten Betriebsmodus ist, konfiguriert ist, um die Ressourcen nicht zu nutzen, um eine digitale Darstellung aufzuzeichnen und um zu dem Authentifizierungszentrum (CA) die Navigationsinformation und/oder die geschätzten Rohgrößen zu übertragen, ohne sie mit der digitalen Darstellung zu begleiten.

3. Empfänger (RXj) von Funknavigationssignalen nach Anspruch 2, **dadurch gekennzeichnet, dass** der Prozessor konfiguriert ist, um von dem ersten Betriebsmodus auf den zweiten Betriebsmodus oder umgekehrt beim Auftreten eines Ereignisses, das als einen solchen Übergang auslösen müssend registriert ist, überzugehen.

4. Empfänger (RXⱼ) von Funknavigationssignalen nach Anspruch 3, **dadurch gekennzeichnet, dass** der Prozessor konfiguriert ist, um von dem zweiten Betriebsmodus auf den ersten Betriebsmodus beim Auftreten mindestens eines der folgenden Ereignisse überzugehen:
Empfang einer Anfrage zum Übergehen auf den ersten Betriebsmodus, die von dem Authentifizierungszentrum (CA) ausgegeben wird;
Empfang einer Bekanntgabe von dem Authentifizierungszentrum (CA), die die Authentizität der übertragenen Navigationsinformation und/oder der übertragenen geschätzten Rohgrößen verneint;
Erfassen einer Benutzeranfrage zur Prüfung der Authentizität der Navigationsinformation;
Erfassen, dass eines oder mehrere der empfangenen Funknavigationssignale ein vordefiniertes Qualitätskriterium nicht erfüllen;
Erfassen, dass der Unterschied zwischen der aktuellen PVT-Lösung und der letzten PVT-Lösung, die von dem Authentifizierungszentrum (CA) authentifiziert wurde, einen vorbestimmten Schwellenwert überschreitet.

5. Empfänger (RXⱼ) von Funknavigationssignalen nach Anspruch 3 oder 4, **dadurch gekennzeichnet, dass** der Prozessor konfiguriert ist, um von dem ersten Betriebsmodus auf den zweiten Betriebsmodus beim Auftreten mindestens eines der folgenden Ereignisse überzugehen:
Empfang einer Anfrage zum Übergehen auf den zweiten Betriebsmodus, die von dem Authentifizierungszentrum (CA) ausgegeben wird;
Empfang einer Bekanntgabe von dem Authentifizierungszentrum (CA), die die Authentizität der übertragenen Navigationsinformation und/oder der übertragenen geschätzten Rohgrößen bestätigt;
Erfassen einer Benutzeranfrage zum Einstellen der Prüfung der Authentizität der Navigationsinformation;
Erfassen, dass alle empfangenen Funknavigationssignale ein vordefiniertes Qualitätskriterium erfüllen;
Erfassen eines niedrigen Energievorratspegels.

6. Empfänger (RXⱼ) von Funknavigationssignalen nach Anspruch 3 oder 4, **dadurch gekennzeichnet, dass** der Prozessor konfiguriert ist, um sich in dem ersten Betriebsmodus auf Anfrage des Authentifizierungszentrums (CA) zu verriegeln.

7. Empfänger (RXⱼ) von Funknavigationssignalen nach Anspruch 2 oder 3, **dadurch gekennzeichnet, dass** der Prozessor konfiguriert ist, um die Ressourcen, die das Aufzeichnen der digitalen Darstellungen erlauben, mindestens teilweise zu deaktivieren, wenn er von den ersten Betriebsmodus auf den zweiten Betriebsmodus übergeht.

8. Verfahren zum Prüfen der Authentizität von Funknavigationssignalen, die von Empfängern (RXⱼ) von Funknavigationssignalen empfangen werden, wobei jeder spezifische Sender (SVⁱ) mindestens ein Signal mit freiem Zugriff (SOⁱ) und ein Signal mit gesichertem Zugriff (SCⁱ) sendet, wobei das Verfahren durch folgende Aktionen gekennzeichnet ist:
Empfang (E20, E31) durch einen oder mehrere gesicherte Telekommunikationskanäle von Navigationsinformationen und/oder geschätzten Rohgrößen von unterschiedlichen Empfängern (RXⱼ) von Funknavigationssignalen, wobei die Navigationsinformationen und/oder die geschätzten Rohgrößen von einer digitalen Darstellung (CN) mindestens der Signale mit gesichertem Zugriff begleitet sind oder nicht, wobei jede digitale Darstellung in definierter zeitlicher Beziehung mit der Navigationsinformation und/oder den Rohgrößen, die sie begleitet, steht;
[a] für jeden Satz aus einer Navigationsinformation und/oder von Rohgrößen, die von einer digitalen Darstellung begleitet sind, Prüfung (E32), ob die digitale Darstellung an der Position und an dem Datum aufgezeichnet werden konnte, die von der Navigationsinformation angegeben werden und/oder aus den Rohgrößen ableitbar sind;
Eingabe (E36) des Resultats mindestens jeder positiven Prüfung in ein geographisches Informationssystem (34);
[b] für jeden Satz aus einer Navigationsinformation und/oder Rohgrößen, die nicht von einer digitalen Darstellung begleitet sind, Prüfung (E33) mit Hilfe des geographischen Informationssystems (34), ob die Position und das Datum, die von der Navigationsinformation angegeben werden und/oder aus den Rohgrößen ableitbar sind, in einer Nähe mindestens einer Position und/oder eines Datums liegen, für die die oben stehende Prüfung [a] positiv war;
Übertragung (E34, E37) an die unterschiedlichen Empfänger (RXⱼ) von Funknavigationssignalen durch einen oder mehrere gesicherte Telekommunikationskanäle einer Bekanntgabe, die die Authentizität der Navigationsinformation und/oder der geschätzten Rohgrößen, die jeweils von diesen Empfängern (RXⱼ) übertragen wurden, betrifft, wobei die Bekanntgabe je nach Fall das Resultat der oben stehenden Prüfung [a] oder [b] wiedergibt.

9. Verfahren nach Anspruch 8, **dadurch gekennzeichnet, dass** es Folgendes umfasst:
Eingabe (E36) in das geographische Informationssystem (34) der Position und des Datums, die von der Navigationsinformation angegeben werden und/oder aus den Rohdaten jedes Empfängers (RXⱼ) ableitbar sind.

10. Verfahren nach Anspruch 9, **dadurch gekennzeichnet, dass** es Folgendes umfasst:
Senden an ausgewählte Empfänger einer Anfrage (E42) um Übergehen auf einen ersten Betriebsmodus, in dem diese Empfänger digitale Darstellungen mindestens der Signale mit gesichertem Zugriff aufzeichnen und ihre Navigationsinformationen und/oder ihre geschätzten Rohgrößen begleitet von den jeweiligen digitalen Darstellungen mitteilen.

11. Verfahren nach den Ansprüchen 9 oder 10, **dadurch gekennzeichnet, dass** es Folgendes umfasst:
das Senden an ausgewählte Empfänger einer Anfrage (E42), auf einen zweiten Betriebsmodus überzugehen, in dem diese Empfänger ihre Navigationsinformationen und/oder ihre geschätzten Rohgrößen mitteilen, ohne sie mit den digitalen Darstellungen zu begleiten.

12. Verfahren nach den Ansprüchen 9, 10 und 11, **dadurch gekennzeichnet, dass** es Folgendes umfasst:
Identifikation der Empfänger, von welchen verlangt wird, dass sie auf den ersten Betriebsmodus bzw. den zweiten Betriebsmodus übergehen, mit Hilfe einer Routine, die darauf abzielt, eine Deckung der aktuellen Positionen der Empfänger durch die vordefinierten Nachbarschaften unter der Auflage einer Minimierung der Last auf dem einen oder den mehreren gesicherten Telekommunikationskanälen, und/unter der Auflage einer Minimierung der Berechnungskosten der oben stehenden Prüfungen [a] und [b] (E40) zu erhalten.

13. Verfahren nach einem der Ansprüche 9 bis 12, **dadurch gekennzeichnet, dass** es das Erfassen einer Attrappe und/oder das Schätzen der Position einer Attrappe (E38) umfasst.

14. Authentifizierungszentrum (CA) für die Prüfung der Authentizität von Funknavigationssignalen, die von Empfängern (RXⱼ) von Funknavigationssignalen empfangen werden, wobei jeder spezifische Sender (SVⁱ) mindestens ein Signal mit freiem Zugriff (SOⁱ) und ein Signal mit gesichertem Zugriff (SCⁱ) sendet, wobei das Authentifizierungszentrum (CA) Folgendes umfasst:
ein oder mehrere gesicherte Kommunikationsmodule (30), die es dem Authentifizierungszentrum (CA) erlauben, Navigationsinformationen und/oder geschätzte Rohgrößen von unterschiedlichen Empfängern (RXⱼ) von Funknavigationssignalen zu empfangen, wobei die Navigationsinformationen und/oder die geschätzten Rohgrößen von einer digitalen Darstellung (CN) mindestens der Signale mit gesichertem Zugriff begleitet sind, wobei jede digitale Darstellung in definierter zeitlicher Beziehung mit der Navigationsinformation und/oder den Rohgrößen, die sie begleitet, steht;
ein geographisches Informationssystem (34);
eine Datenverarbeitungseinheit (32), die in das geographische Informationssystem (34) integriert ist oder nicht, die konfiguriert ist, um folgende Vorgänge auszuführen:
[a] für jeden Satz aus einer Navigationsinformation und/oder Rohgrößen, der von einer digitalen Darstellung begleitet ist, Prüfung, ob die digitale Darstellung an der Position und an dem Datum, die von der Navigationsinformation angegeben werden und/oder aus den Rohdaten ableitbar sind, aufgezeichnet werden konnte;
Eingabe des Resultats mindestens jeder positiven Prüfung in das geographische Informationssystem (34);
[b] für jeden Satz aus einer Navigationsinformation und/oder Rohgrößen, die nicht von einer digitalen Darstellung begleitet sind, Prüfung durch Abfragen des geographischen Informationssystems (34), ob die Position und das Datum, die von der Navigationsinformation angegeben werden und/oder aus den Rohgrößen ableitbar sind, in einer Nähe mindestens einer Position und eines Datums liegen, für die die oben stehende Prüfung [a] positiv war; und
die Übertragung an die unterschiedlichen Empfänger (RXⱼ) von Funknavigationssignalen, durch das eine oder die mehreren gesicherten Kommunikationsmodule, einer Bekanntgabe, die die Authentizität der Navigationsinformation und/oder der geschätzten Rohgrößen, die jeweils von diesen Empfängern (RXⱼ) übertragen werden, betrifft, wobei die Bekanntgabe je nach Fall das Resultat der oben stehenden Prüfung [a] oder [b] wiedergibt.

15. Authentifizierungszentrum (CA) nach Anspruch 14, **dadurch gekennzeichnet, dass** es ein kryptografisches Modul (36) umfasst, das fähig ist, Antworten der Spreizcodes der Signale mit gesichertem Zugriff der Funknavigationssignale zu erzeugen, wobei die Datenverarbeitungseinheit (32) konfiguriert ist, um eine Position und ein Datum auf der Basis einer Korrelation zwischen einer digitalen Darstellung und den Spreizcode-Antworten der Signale mit gesichertem Zugriff zu berechnen, wobei die Datenverarbeitungseinheit (32) außerdem konfiguriert ist, um die oben stehende Prüfung [a] auf der Basis eines Vergleichs der berechneten Position und des berechneten Datums selbst mit der Position und dem Datum, die von der Navigationsinformation angegeben werden und/oder aus den von einem Empfänger (RXⱼ) übertragenen Rohdaten ableitbar sind, auszuführen.

16. Authentifizierungszentrum (CA) nach Anspruch 14 oder 15, **dadurch gekennzeichnet, dass** es konfiguriert ist, um das Verfahren nach einem der Ansprüche 8 bis 13 umzusetzen.

## Claims

1. Method for processing radionavigation signals, intended to be implemented by a receiver (RXj) of radionavigation signals, comprising
the reception of one or more radiofrequency bands containing a set of radionavigation signals, each of which originates from a specific transmitter (SVⁱ), each transmitter (SVⁱ) transmitting at least one open access signal (SOⁱ) and one secured access signal (SCⁱ) ;
the estimation of raw radionavigation quantities, including at least pseudo-distances and, optionally, phases, Doppler phase shifts, etc., from at least the open access signals;
the computation of a navigation information item (PVT) (E10, E20) on the basis of the estimated raw quantities;
the communication (E12, E22) with an authentication centre (CA) by a secured communication channel, said communication comprising the transmission of the navigation information item and/or of the estimated raw quantities to the authentication centre (CA) and the reception from the authentication centre (CA) of a notification concerning the authenticity of the navigation information item and/or of the estimated raw quantities transmitted (E14, E24);
the method being **characterized by** a first mode of operation and a second mode of operation of the receiver, the method comprising:
in the first mode of operation of the receiver (RXj) of radionavigation signals, the storage of a digital snapshot (E10) at least of the secured access signals and the transmission (E12) of this digital snapshot to the authentication centre (CA) together with the navigation information item and/or the estimated raw quantities, the digital snapshot being in a defined temporal relationship with the navigation information item and/or the raw quantities transmitted;
in the second mode of operation of the receiver (RXj) of radionavigation signals, the transmission (E22), to the authentication centre (CA), of the navigation information item and/or of the estimated raw quantities without an accompanying digital snapshot.

2. Receiver (RXj) of radionavigation signals, comprising an RF stage (14) for receiving one or more radiofrequency bands containing a set of radionavigation signals, each of which originates from a specific transmitter (SVⁱ), each transmitter (SVⁱ) transmitting at least one open access signal (SOⁱ) and one secured access signal (SCⁱ);
a processor, linked to the RF stage (14), configured to acquire and track at least open access signals, the acquisition and the tracking producing estimations of raw radionavigation quantities, and to compute a navigation information item on the basis of the estimate raw quantities;
the processor also having resources that make it possible to store digital snapshots at least of the secured access signals;
a secured communication module (28) allowing the receiver (RXj) to communicate with an authentication centre (CA),
the processor being configured to transmit, to the authentication centre (CA), the navigation information item and/or the estimated raw quantities and to receive from the authentication centre (CA) a notification concerning the authenticity of the navigation information item and/or of the estimated raw quantities transmitted;
**characterized in that** the receiver (RXj) is configured to operate, alternately, in a first mode of operation and in a second mode of operation;
the processor, when the receiver (RXj) is in the first mode of operation, being configured to use said resources to store a digital snapshot and to transmit this digital snapshot to the authentication centre (CA), together with the navigation information item and/or the estimated raw quantities, the digital snapshot being in a defined temporal relationship with the navigation information item and/or the raw quantities transmitted;
the processor, when the receiver (RXj) is in the second mode of operation, being configured to not use said resources to store a digital snapshot and to transmit to the authentication centre (CA) the navigation information item and/or the estimated raw quantities without an accompanying digital snapshot.

3. Receiver (RXj) of radionavigation signals according to Claim 2, **characterized in that** the processor is configured to switch from the first mode of operation to the second mode of operation or vice versa upon the occurrence of an event stored as having to trigger such a switch.

4. Receiver (RXj) of radionavigation signals according to Claim 3, **characterized in that** the processor is configured to switch from the second to the first mode of operation upon the occurrence of at least one of the following events:
reception of a request to switch to the first mode of operation issued by the authentication centre (CA);
reception of a notification from the authentication centre (CA) denying the authenticity of the navigation information item and/or of the estimated raw quantities transmitted;
detection of a user request to check the authenticity of the navigation information item;
detection that one or more of the radionavigation signals received do not satisfy a predefined quality criterion;
detection that the difference between the current PVT solution and the last PVT solution authenticated by the authentication centre (CA) exceeds a predefined threshold.

5. Receiver (RXj) of radionavigation signals according to Claim 3 or 4,
**characterized in that** the processor is configured to switch from the first mode of operation to the second mode of operation upon the occurrence of at least one of the following events:
reception of a request to switch to the second mode of operation issued by the authentication centre (CA);
reception of a notification from the authentication centre (CA) affirming the authenticity of the navigation information item and/or of the estimated raw quantities transmitted;
detection of a user request to no longer check the authenticity of the navigation information item;
detection that all the radionavigation signals received satisfy a predefined quality criterion;
detection of a low energy reserve level.

6. Receiver (RXj) of radionavigation signals according to Claim 3 or 4,
**characterized in that** the processor is configured to be locked in the first mode of operation on request from the authentication centre (CA).

7. Receiver (RXj) of radionavigation signals according to Claim 2 or 3,
**characterized in that** the processor is configured to deactivate, at least partially, said resources making it possible to store digital snapshots when it switches from the first mode of operation to the second mode of operation.

8. Method for checking the authenticity of radionavigation signals received by the receivers (RXⱼ) of radionavigation signals, each specific transmitter (SVⁱ) transmitting at least one open access signal (SOⁱ) and one secured access signal (SCⁱ), the method being **characterized by** the following actions:
the reception (E20, E31), by one or more secured telecommunication channels, of navigation information items and/or of estimated raw quantities from different receivers (RXⱼ) of radionavigation signals, the navigation information items and/or the estimated raw quantities being accompanied or not by a digital snapshot (CN) at least of the secured access signals, each digital snapshot being in a defined temporal relationship with the navigation information item and/or the raw quantities that it accompanies;
[a] for each set of a navigation information item and/or of raw quantities accompanied by a digital snapshot, checking (E32) whether the digital snapshot is likely to have been stored at the position and at the date informed by the navigation information item and/or derivable from the raw quantities;
the input E36) of the result at least of each positive check into a geographic information system (34);
[b] for each set of a navigation information item and/or of raw quantities unaccompanied by a digital snapshot, checking (E33) using the geographic information system (34), whether the position and the date informed by the navigation information item and/or derivable from the raw quantities are located in a vicinity of at least one position and of one date for which the check under [a] was positive;
the transmission (E34, E37) to the different receivers (RXⱼ) of radionavigation signals, by one or more secured telecommunication channels, of a notification concerning the authenticity of the navigation information item and/or of the estimated raw quantities respectively transmitted by these receivers (RXⱼ), said notification reflecting the result of the check under [a] or [b], depending on the case.

9. Method according to Claim 8, **characterized in that** it comprises:
the input (E36) in the geographic information system (34) of the position and of the date informed by the navigation information item and/or derivable from the raw quantities from each receiver (RXj).

10. Method according to Claim 9, **characterized in that** it comprises:
the sending, to selected receivers, of a request (E42) to switch to a first mode of operation, in which these receivers store digital snapshots at least of the secured access signals and communicate their navigation information items and/or their estimated raw quantities accompanied by the respective digital snapshots.

11. Method according to Claims 9 or 10, **characterized in that** it comprises:
the sending, to selected receivers, of a request (E42) to switch to a second mode of operation in which these receivers communicate their navigation information items and/or their estimated raw quantities without accompanying digital snapshots.

12. Method according to Claims 9, 10 and 11, **characterized in that** it comprises:
the identification of receivers which will be requested to switch to the first mode of operation, respectively to the second mode of operation, using a routine aiming to obtain a coverage of the current positions of the receivers by the predefined vicinities subject to the constraint of a minimization of the load on said one or more secured telecommunication channels and/or subject to the constraint of a minimization of the costs of computation of the checks under [a] and under [b] (E40) .

13. Method according to any one of Claims 9 to 12, **characterized in that** it comprises the detection of a decoy and/or the estimation of the position of a decoy (E38) .

14. Authentication centre (CA) for checking the authenticity of radionavigation signals received by receivers (RXⱼ) of radionavigation signals, each specific transmitter (SVⁱ) transmitting at least one open access signal (SOⁱ) and one secured access signal (SCⁱ), the authentication centre (CA) comprising:
one or more secured communication modules (30), allowing the authentication centre (CA) to receive navigation information items and/or estimated raw quantities from different receivers (RXⱼ) of radionavigation signals, the navigation information items and/or the estimated raw quantities being accompanied or not by a digital snapshot (CN) at least of the secured access signals, each digital snapshot being in a defined temporal relationship with the navigation information item and/or the raw quantities that it accompanies;
a geographic information system (34);
a computer processing unit (32), integrated or not with the geographic information system (34), configured to perform the following operations:
[a] for each set of a navigation information item and/or of raw quantities accompanied by a digital snapshot, checking whether the digital snapshot is likely to have been stored at the position and at the date informed by the navigation information item and/or derivable from the raw quantities;
the input of the result at least of each positive check in the geographic information system (34);
[b] for each set of a navigation information item and/or of raw quantities unaccompanied by a digital snapshot, checking, by interrogation of the geographic information system (34), whether the position and the date informed by the navigation information item and/or derivable from the raw quantities are located within a vicinity at least of a position and of a date for which the check under [a] was positive; and
the transmission to the different receivers (RXⱼ) of radionavigation signals, by one or more secured communication modules, of a notification concerning the authenticity of the navigation information item and/or of the estimated raw quantities respectively transmitted by these receivers (RXⱼ), said notification reflecting the result of the check under [a] or [b], depending on the case.

15. Authentication centre (CA) according to Claim 14, **characterized in that** it comprises a cryptographic module (36) capable of producing replicas of the spreading codes of the secured access signals of the radionavigation signals, the computer processing unit (32) being configured to compute a position and a date on the basis of a correlation between a digital snapshot and the replicas of spreading codes of the secured access signals, the computer processing unit (32) being also configured to perform the check under [a] on the basis of a comparison of the position and of the date computed by itself with the position and with the date informed by the navigation information item and/or derivable from the raw quantities transmitted by a receiver (RXj).

16. Authentication centre (CA) according to Claim 14 or 15, **characterized in that** it is configured to implement the method according to any one of Claims 8 to 13.
